# EUROPEAN PATENT SPECIFICATION

(11) **EP 4 055 296 B1**
(45) Date of publication and mention of the grant of the patent: **07.02.2024**
(21) Application number: 20803959.4
(22) Date of filing: 06.11.2020
(51) Int. Cl.: F16D 65/12

(54) **BRAKE DISC FOR CYCLE OR MOTORCYCLE**
BREMSSCHEIBE FÜR FAHRRAD ODER MOTORRAD
DISQUE DE FREIN POUR CYCLE OU MOTOCYCLETTE

(30) Priority: 07.11.2019 IT 201900020538
(43) Date of publication of application: 14.09.2022
(73) Proprietor: Sunstar Engineering Europe GmbH, 86641 Rain (DE)
(72) Inventor: BASSO, Davide, 20812 Limbiate (MB) (IT)
(74) Representative: Branca, Emanuela
(86) International application number: PCT/IB2020/060446
(87) International publication number: WO 2021/090249

(56) References cited:
- EP-A1- 3 491 264
- DE-A1-102006 009 565
- JP-U- S58 127 230
- US-A1- 2013 168 193
- US-A1- 2017 108 064

## Description

The present invention refers to a brake disc for cycle or motorcycle.

In the state of the art, a brake disc is known comprising an outer ring which forms two flat surfaces parallel to each other which define contact areas with friction means adapted to brake.The outer ring comprises an outer edge and an inner edge from which protuberances protrude radially adapted to be associated with an inner support ring which is adapted to fit centrally into a hub of a rotating means of a cycle or a motorcycle.The outer edge of the outer ring comprises recesses carved on the perimeter, such as for example EP 2112398 A1.

Further examples of brake discs with recesses carved on the disc surface can be found in US 2017/108064 A1 and JP S58 127230 U.

Disadvantageously, the brake disc is very hot following a braking and it is not possible to disperse the heat effectively.

The object of the present invention consists in realising a brake disc for cycle or for motorcycle which is able to disperse in a much more effective way a heat generated by braking between the disc and friction means adapted to brake.

According to the invention, this object is achieved with a brake disc for cycle or for motorcycle according to claim 1.

Other features are comprised in the dependent claims.

The features and advantages of the present invention will be more apparent from the following description, which is to be understood as exemplifying and not limiting, with reference to the appended schematic drawings, wherein:
Figure 1 is a top view of a brake disc for cycle or for motorcycle according to the present invention;
Figure 2 is an enlarged view of a detail A of Figure 1;
Figure 3 is a view from one side of the brake disc of Figure 1;
Figure 4 is an enlarged view of a detail B of Figure 3;
Figure 5 is a sectional view of the disc along the line V-V of Figure 1;
Figure 6 shows an enlarged portion of a top view of an alternative brake disc according to the present invention;
Figure 7 shows an enlarged portion of a view from one side of the alternative brake disc of Figure 6.

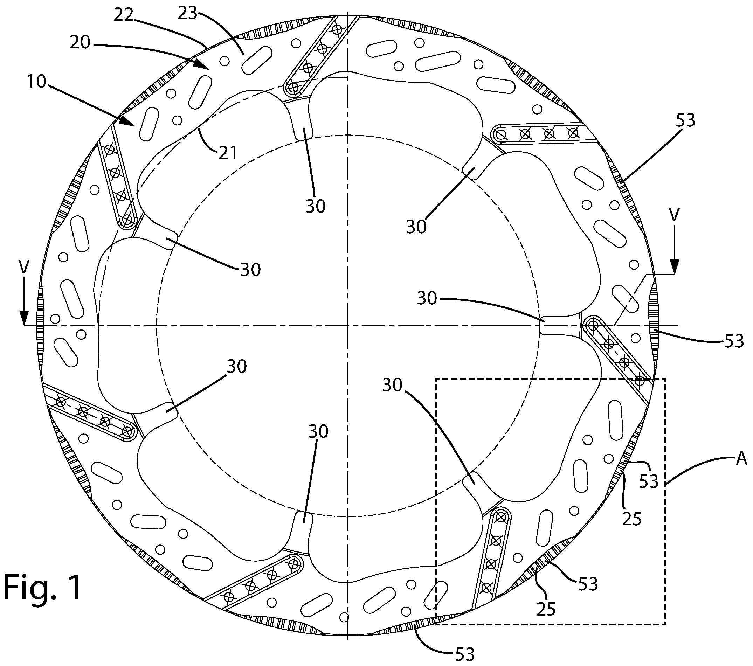

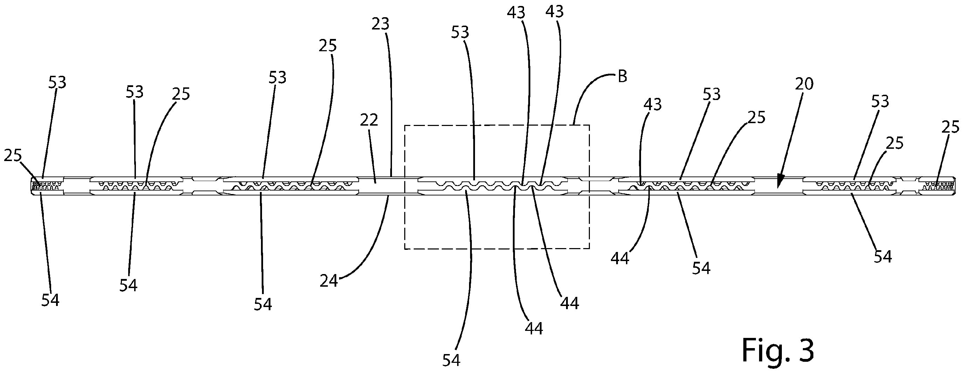

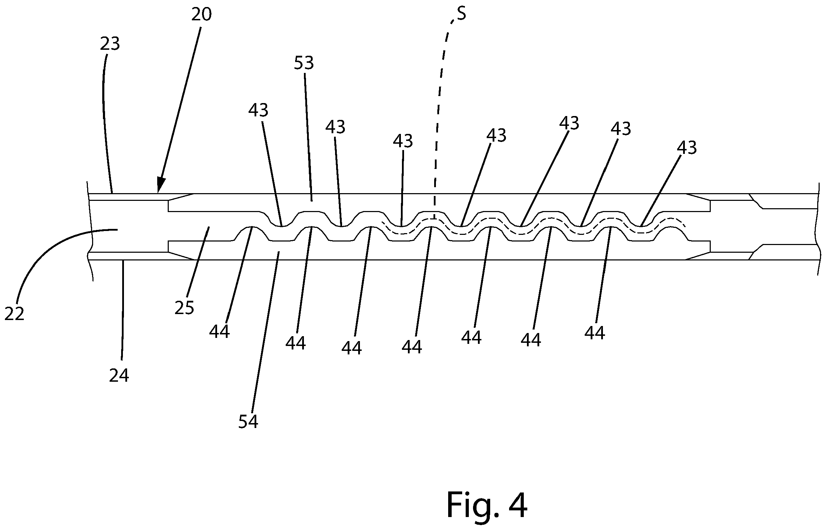

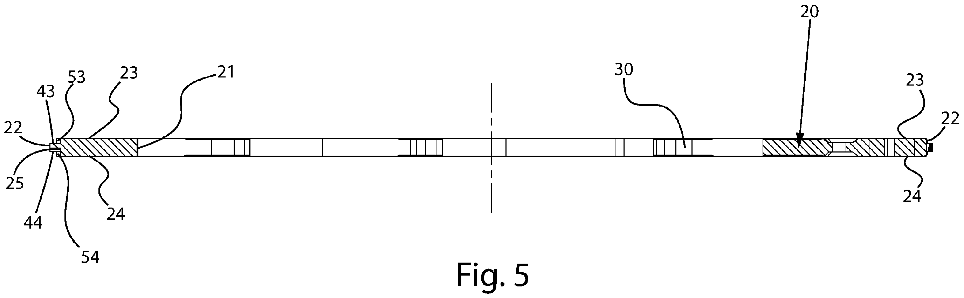

With reference to the aforementioned figures and in particular Figures 1-5, a brake disc 10 for cycle or motorcycle is shown comprising an outer ring 20 comprising an inner edge 21 and an outer edge 22, a front surface 23 and a rear surface 24.

Said inner edge 21 comprises a multiplicity of protuberances or ribs 30 adapted to be mounted with a central disc not shown in the figures of the brake disc 10 which is configured to fit into a hub of a cycle or motorcycle wheel not shown in the figures.

Said front surface 23 and said rear surface 24 are parallel to each other and define contact areas with friction means for braking delimited at least by said inner edge 21 and by said outer edge 22.

Said outer ring 20 comprises a multiplicity of recesses 43, 44 divided into a series of groups of multiplicities of recesses 43, 44 arranged periodically to each other.

Each group of multiplicities of recesses 43, 44 comprises a multiplicity of front recesses 43 carved into the front surface 23 in the contact area and a multiplicity of rear recesses 44 carved into the rear surface 24 in the contact area.

Said multiplicity of front recesses 43 is alternated with said multiplicity of rear recesses 44 in such a way that a cross section of the outer ring 20 follows an outline of a geometric sinusoid S.

Advantageously, a heat generated during braking is dispersed at least in a direction perpendicular to the outer ring 10 both to the front and to the rear.

Preferably and even more advantageously, each recess 43, 44 of said multiplicity of recesses 43, 44 is formed along said outer edge 22 in order to disperse the heat generated by the brake in a radial direction to the outside of the outer ring 10.

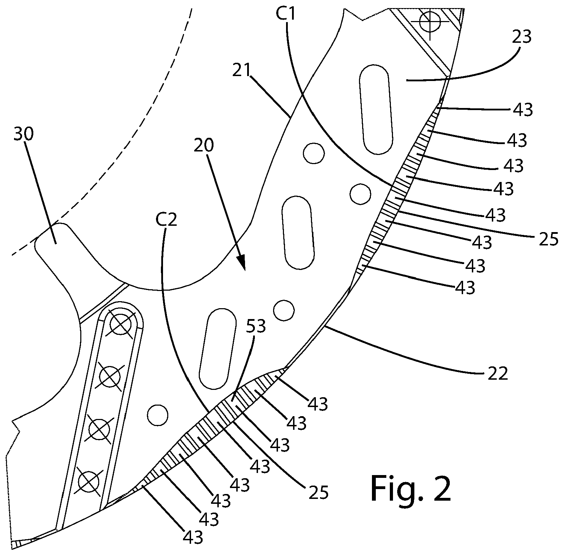

Preferably each recess 43, 44 of said multiplicity of recesses 43, 44 is carved onto the respective surface 23, 24 in such a way that each recess 43, 44 is parallel to every other recess 43, 44 of the same group as shown in particular in the Figure 2.

Preferably each recess 43, 44 of said multiplicity of recesses 43, 44 comprises a length shorter than a radial length of said outer ring 20.The recesses 43, 44 are not formed on the inner edge 21 of the outer ring 20 advantageously in such a way as not to disperse heat inside the brake disc 10.

Preferably each group of multiplicities of front recesses 43 and of multiplicities of rear recesses 44 requires that at least two recesses 43, 44 of said group comprise different lengths. Advantageously, different lengths of the recesses 43, 44 allow to better disperse the braking heat.

Preferably each group comprises extreme recesses 43, 44 arranged at the ends of said group and central recesses 43, 44 arranged at the centre of said group, wherein said extreme recesses 43, 44 comprise a length shorter than a length of said central recesses 43, 44.

The lengths of the recesses 43, 44 of said group follow an outline of a geometric curve C1, C2, wherein said geometric curve C1, C2 is included in a list comprising parabolas, hyperbolas, sinusoids or combinations thereof, as shown for example in Figure 2.

Even more preferably consecutive groups of recesses 43, 44 follow different outlines of geometric curves C1 and C2 in order to prevent resonance effects.

As shown in particular in Figures 1-5, even more preferably said outer ring 20 comprises a multiplicity of second recesses 53, 54 arranged at said groups of multiplicities of front recesses 43 and of rear recesses 44, wherein said second recesses 53, 54 comprise second front recesses 53 carved into the front surface 23, and second rear recesses 54 carved into the rear surface 24, wherein said second recesses 53, 54 reduce a thickness of said outer ring 10 at said groups of multiplicities of front recesses 43 and of rear recesses 44, in such a way as to form a central protuberance 25 of a thickness lower than said outer ring 20, wherein said protuberance 25 comprises a front surface and a rear surface, in which said multiplicity of front recesses 43 and said multiplicity of rear recesses 44 are carved, respectively.

Advantageously, said second recesses 53, 54 allow the braking heat to be better dispersed both in a perpendicular direction to the front and to the rear and in a radial direction.

Even more preferably, said second recesses 53, 54 comprise a hollow outline, which follows an outline of a geometric curve C1, C2, wherein said geometric curve C1, C2 is included in a list comprising parabolas, hyperbolas, sinusoids or combinations thereof, i.e. they follow the outline of the respective group of multiplicities of recesses 43, 44 as shown in particular in Figures 1 and 2.

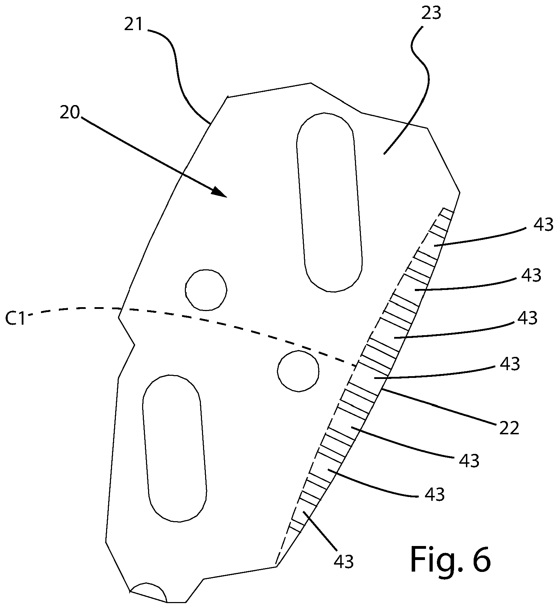

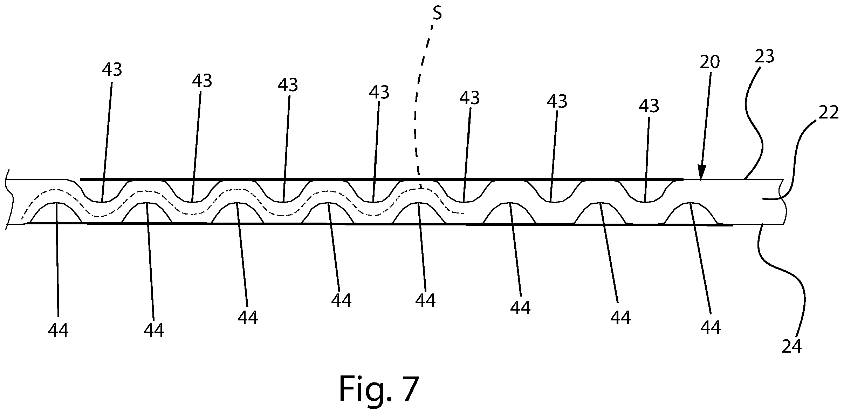

Alternatively, as shown in Figures 6 and 7, it is possible to provide that the outer ring 20 does not require second recesses 53, 54.

Alternatively, it is possible to provide that each recess 43, 44 of said multiplicities of recesses 43, 44 has a length shorter than the radial length of the outer ring 20 and is not formed along said outer edge 22, limiting itself to dispersing the heat of the braking towards one direction perpendicular to the outer ring 20.

Alternatively, it is provided that each recess 43, 44 of said multiplicity of recesses 43, 44 is carved onto the respective surface 23, 24 in a radial direction.

The invention thus conceived is susceptible to many modifications and variants, all falling within the same inventive concept; furthermore, all details can be replaced by equivalent technical elements.In practice, the materials used, as well as the dimensions thereof, can be of any type according to the technical requirements.

## Claims

1. Brake disc (10) for cycle or motorcycle comprising an outer ring (20) comprising an inner edge (21) and an outer edge (22), a front surface (23) and a rear surface (24),
wherein said inner edge (21) comprises a multiplicity of protuberances or ribs (30) adapted to be mounted with a central disc of the brake disc (10), which is configured to fit into a hub of a cycle or motorcycle wheel,
wherein said front surface (23) and said rear surface (24) are parallel to each other and define a contact area with friction means for braking,
wherein said outer ring (20) comprises a multiplicity of recesses (43, 44) divided into a series of multiplicities of recesses (43, 44) arranged periodically to each other,
**characterised in that**
each group of multiplicities of recesses (43, 44) comprises a multiplicity of front recesses (43) carved into the front surface (23) in the contact area, and a multiplicity of rear recesses (44) carved into the rear surface (24) in the contact area,
wherein said multiplicity of front recesses (43) is alternated with said multiplicity of rear recesses (44) in such a way that a cross section of the outer ring (20) follows an outline of a geometric sinusoid (S).

2. Brake disc (10) according to claim 1, **characterised in that** each recess (43, 44) of said multiplicity of recesses (43, 44) is formed along said outer edge (22).

3. Brake disc (10) according to any one of claims 1 or 2, **characterised in that** each recess (43, 44) of said multiplicity of recesses (43, 44) is carved onto the respective surface (23, 24) in a radial direction.

4. Brake disc (10) according to any one of claims 1 or 2, **characterised in that** each recess (43, 44) of said multiplicity of recesses (43, 44) is carved onto the respective surface (23, 24) in such a way that each recess (43, 44) is parallel to every other recess (43, 44) of the same group.

5. Brake disc (10) according to any one of claims 3 or 4, **characterised in that** each recess (43, 44) of said multiplicity of recesses (43, 44) comprises a length shorter than a radial length of said outer ring (20).

6. Brake disc (10) according to claim 5, **characterised in that** each group of multiplicities of front recesses (43) and of multiplicities of rear recesses (44) requires that at least two recesses (43, 44) of said group comprise different lengths.

7. Brake disc (10) according to claim 6, **characterised in that** each group comprises extreme recesses (43, 44) arranged at the ends of said group and central recesses (43, 44) arranged at the centre of said group, wherein said extreme recesses (43, 44) comprise a length shorter than a length of said central recesses (43, 44).

8. Brake disc (10) according to any one of claims 6 or 7, **characterised in that** the lengths of the recesses (43, 44) of said group follow an outline of a geometric curve (C1, C2), wherein said geometric curve (C1, C2) is included in a list comprising parabolas, hyperbolas, sinusoids or combinations thereof.

9. Brake disc (10) according to any one of claims 1-8, **characterised in that** said outer ring (20) comprises a multiplicity of second recesses (53, 54) arranged at said groups of multiplicities of front recesses (43) and of rear recesses (44), wherein said second recesses (53, 54) comprise second front recesses (53) carved into the front surface (23), and second rear recesses (54) carved into the rear surface (24), wherein said second recesses (53, 54) reduce a thickness of said outer ring (10) at said groups of multiplicities of front recesses (43) and of rear recesses (44), in such a way as to form a central protuberance (25) of a thickness lower than said outer ring (20), wherein said protuberance (25) comprises a front surface and a rear surface, in which said multiplicity of front recesses (43) and said multiplicity of rear recesses (44) are carved, respectively.

10. Brake disc (10) according to claim 9, **characterised in that** said second recesses (53, 54) comprise a hollow outline, which follows an outline of a geometric curve (C1, C2), wherein said geometric curve (C1, C2) is included in a list comprising parabolas, hyperbolas, sinusoids or combinations thereof.

## Patentansprüche

1. Bremsscheibe (10) für Fahrrad oder Motorrad, umfassend einen Außenring (20), der einen inneren Rand (21) und einen äußeren Rand (22), eine vordere Oberfläche (23) und eine hintere Oberfläche (24) umfasst,
wobei der innere Rand (21) eine Vielzahl von Ausstülpungen oder Rippen (30) umfasst, die dazu geeignet sind, mit einer zentralen Scheibe der Bremsscheibe (10) montiert zu werden, die so konfiguriert ist, dass sie in eine Radnabe eines Fahrrads oder Motorrads passt,
wobei die vordere Oberfläche (23) und die hintere Oberfläche (24) parallel zueinander sind und einen Kontaktbereich mit Reibmitteln zum Bremsen definieren,
wobei der Außenring (20) eine Vielzahl von Ausnehmungen (43, 44) umfasst, die in eine Reihe von periodisch zueinander angeordneten Vielfachen von Ausnehmungen (43, 44) unterteilt sind,
**dadurch gekennzeichnet, dass**
jede Gruppe von Vielfachen von Ausnehmungen (43, 44) eine Vielzahl von vorderen Ausnehmungen (43), die in die vordere Oberfläche (23) im Kontaktbereich eingearbeitet sind, und eine Vielzahl von hinteren Ausnehmungen (44), die in die hintere Oberfläche (24) im Kontaktbereich eingearbeitet sind, umfasst,
wobei sich die Vielzahl der vorderen Ausnehmungen (43) mit der Vielzahl der hinteren Ausnehmungen (44) so abwechselt, dass ein Querschnitt des Außenrings (20) einem Umriss einer geometrischen Sinuskurve (S) folgt.

2. Bremsscheibe (10) nach Anspruch 1, **dadurch gekennzeichnet, dass** jede Ausnehmung (43, 44) der Vielzahl von Ausnehmungen (43, 44) entlang der Außenkante (22) ausgebildet ist.

3. Bremsscheibe (10) nach einem der Ansprüche 1 oder 2, **dadurch gekennzeichnet, dass** jede Ausnehmung (43, 44) der Vielzahl von Ausnehmungen (43, 44) in die jeweilige Oberfläche (23, 24) in radialer Richtung eingearbeitet ist.

4. Bremsscheibe (10) nach einem der Ansprüche 1 oder 2, **dadurch gekennzeichnet, dass** jede Ausnehmung (43, 44) der Vielzahl von Ausnehmungen (43, 44) so in die jeweilige Oberfläche (23, 24) eingearbeitet ist, dass jede Ausnehmung (43, 44) parallel zu jeder anderen Ausnehmung (43, 44) derselben Gruppe ist.

5. Bremsscheibe (10) nach einem der Ansprüche 3 oder 4, **dadurch gekennzeichnet, dass** jede Ausnehmung (43, 44) der Vielzahl von Ausnehmungen (43, 44) eine Länge umfasst, die kürzer ist als eine radiale Länge des Außenrings (20).

6. Bremsscheibe (10) nach Anspruch 5, **dadurch gekennzeichnet, dass** jede Gruppe von Vielfachen von vorderen Ausnehmungen (43) und von Vielfachen von hinteren Ausnehmungen (44) erfordert, dass mindestens zwei Ausnehmungen (43, 44) der Gruppe unterschiedliche Längen umfassen.

7. Bremsscheibe (10) nach Anspruch 6, **dadurch gekennzeichnet, dass** jede Gruppe äußerste Ausnehmungen (43, 44), die an den Enden der Gruppe angeordnet sind, und mittlere Ausnehmungen (43, 44), die in der Mitte der Gruppe angeordnet sind, umfasst, wobei die äußersten Ausnehmungen (43, 44) eine Länge umfassen, die kürzer ist als eine Länge der mittleren Ausnehmungen (43, 44).

8. Bremsscheibe (10) nach einem der Ansprüche 6 oder 7, **dadurch gekennzeichnet, dass** die Längen der Ausnehmungen (43, 44) der Gruppe einem Umriss einer geometrischen Kurve (C1, C2) folgen, wobei die geometrische Kurve (C1, C2) in einer Liste enthalten ist, die Parabeln, Hyperbeln, Sinuskurven oder Kombinationen davon umfasst.

9. Bremsscheibe (10) nach einem der Ansprüche 1 bis 8, **dadurch gekennzeichnet, dass** der Außenring (20) eine Vielzahl von zweiten Ausnehmungen (53, 54) umfasst, die an den Gruppen von Vielfachen von vorderen Ausnehmungen (43) und hinteren Ausnehmungen (44) angeordnet sind, wobei die zweiten Ausnehmungen (53, 54) zweite vordere Ausnehmungen (53), die in die vordere Oberfläche (23) eingearbeitet sind, und zweite hintere Ausnehmungen (54), die in die hintere Oberfläche (24) eingearbeitet sind, umfassen, wobei die zweiten Ausnehmungen (53, 54) eine Dicke des Außenrings (10) an den Gruppen von Vielfachen von vorderen Ausnehmungen (43) und von hinteren Ausnehmungen (44) derart verringern, dass eine mittlere Ausstülpung (25) mit einer geringeren Dicke als der Außenring (20) gebildet wird, wobei die Ausstülpung (25) eine vordere Oberfläche und eine hintere Oberfläche umfasst, in die die Vielzahl von vorderen Ausnehmungen (43) bzw. die Vielzahl von hinteren Ausnehmungen (44) eingearbeitet ist.

10. Bremsscheibe (10) nach Anspruch 9, **dadurch gekennzeichnet, dass** die zweiten Ausnehmungen (53, 54) einen hohlen Umriss umfassen, der einem Umriss einer geometrischen Kurve (C1, C2) folgt, wobei die geometrische Kurve (C1, C2) in einer Liste enthalten ist, die Parabeln, Hyperbeln, Sinuskurven oder Kombinationen davon umfasst.

## Revendications

1. Disque de frein (10) pour cycle ou motocycle comprenant un anneau extérieur (20) composé d'un bord intérieur (21) et d'un bord extérieur (22), d'une surface avant (23) et d'une surface arrière (24),
dans lequel ledit bord intérieur (21) comprend une multiplicité de protubérances ou de nervures (30) conçues pour être montées avec un disque central du disque de frein (10), qui est configuré pour s'adapter à un moyeu d'une roue de cycle ou de motocycle,
dans lequel ladite surface avant (23) et ladite surface arrière (24) sont parallèles l'une à l'autre et définissent une zone de contact avec des moyens de friction pour le freinage,
dans lequel ledit anneau extérieur (20) comprend une multiplicité d'évidements (43, 44) divisés en une série de multiplicités d'évidements (43, 44) agencés périodiquement les uns par rapport aux autres,
**caractérisé en ce que**
chaque groupe de multiplicités d'évidements (43, 44) comprend une multiplicité d'évidements avant (43) creusés dans la surface avant (23) dans la zone de contact, et une multiplicité d'évidements arrière (44) creusés dans la surface arrière (24) dans la zone de contact,
dans lequel ladite multiplicité d'évidements avant (43) est alternée avec ladite multiplicité d'évidements arrière (44) de manière à ce qu'une section transversale de l'anneau extérieur (20) suive un contour de sinusoïde géométrique (S).

2. Disque de frein (10) selon la revendication 1, **caractérisé en ce que** chaque évidement (43, 44) de ladite multiplicité d'évidements (43, 44) est formé le long dudit bord extérieur (22).

3. Disque de frein (10) selon l'une quelconque des revendications 1 ou 2, **caractérisé en ce que** chaque évidement (43, 44) de ladite multiplicité d'évidements (43, 44) est creusé sur la surface respective (23, 24) dans une direction radiale.

4. Disque de frein (10) selon l'une quelconque des revendications 1 ou 2, **caractérisé en ce que** chaque évidement (43, 44) de ladite multiplicité d'évidements (43, 44) est sculpté sur la surface respective (23, 24) de telle sorte que chaque évidement (43, 44) soit parallèle à tous les autres évidements (43, 44) du même groupe.

5. Disque de frein (10) selon l'une quelconque des revendications 3 ou 4, **caractérisé en ce que** chaque évidement (43, 44) de ladite multiplicité d'évidements (43, 44) comprend une longueur inférieure à une longueur radiale dudit anneau extérieur (20).

6. Disque de frein (10) selon la revendication 5, **caractérisé en ce que** chaque groupe de multiplicités d'évidements avant (43) et de multiplicités d'évidements arrière (44) exige qu'au moins deux évidements (43, 44) dudit groupe comprennent des longueurs différentes.

7. Disque de frein (10) selon la revendication 6, **caractérisé en ce que** chaque groupe comprend des évidements extrêmes (43, 44) agencés au niveau des extrémités dudit groupe et des évidements centraux (43, 44) agencés au niveau du centre dudit groupe, dans lequel lesdits évidements extrêmes (43, 44) comprennent une longueur inférieure à une longueur desdits évidements centraux (43, 44).

8. Disque de frein (10) selon l'une quelconque des revendications 6 ou 7, **caractérisé en ce que** les longueurs des évidements (43, 44) dudit groupe suivent un tracé d'une courbe géométrique (C1, C2), ladite courbe géométrique (C1, C2) étant incluse dans une liste comprenant des paraboles, des hyperboles, des sinusoïdes ou des combinaisons de celles-ci.

9. Disque de frein (10) selon l'une quelconque des revendications 1 à 8, **caractérisé en ce que** ledit anneau extérieur (20) comprend une multiplicité de seconds évidements (53, 54) agencés au niveau desdits groupes de multiplicités d'évidements avant (43) et d'évidements arrière (44), dans lesquels lesdits seconds évidements (53, 54) comprennent des seconds évidements avant (53) creusés dans la surface avant (23), et des seconds évidements arrière (54) creusés dans la surface arrière (24), dans lesquels lesdits seconds évidements (53, 54) réduisent l'épaisseur de l'anneau extérieur (10) au niveau des groupes de multiplicités d'évidements avant (43) et arrière (44), de manière à former une protubérance centrale (25) d'une épaisseur inférieure à celle de l'anneau extérieur (20), ladite protubérance (25) comprenant une surface avant et une surface arrière, dans lesquelles sont creusés respectivement ladite multiplicité d'évidements avant (43) et ladite multiplicité d'évidements arrière (44).

10. Disque de frein (10) selon la revendication 9, **caractérisé en ce que** lesdits seconds évidements (53, 54) comprennent un contour creux qui suit le contour d'une courbe géométrique (C1, C2), dans laquelle ladite courbe géométrique (C1, C2) est incluse dans une liste comprenant des paraboles, des hyperboles, des sinusoïdes ou des combinaisons de celles-ci.
